# EUROPÄISCHE PATENTSCHRIFT

(11) **EP 1 946 814 B1**
(45) Veröffentlichungstag und Bekanntmachung des Hinweises auf die Patenterteilung: **13.03.2013**
(21) Anmeldenummer: 07001085.5
(22) Anmeldetag: 18.01.2007
(51) Int. Cl.: B01D 29/39, B01D 29/66

(54) **Vorrichtung und Verfahren zur Rückspülfiltration**
Device and method for backwash filtration
Procédé et dispositif destinés à la filtration avec rétrolavage

(43) Veröffentlichungstag der Anmeldung: 23.07.2008
(73) Patentinhaber: BOKELA Ingenieurgesellschaft für Mechanische Verfahrenstechnik mbH, 76131 Karlsruhe (DE)
(72) Erfinder: Bott, Reinhard, Dr., 76337 Waldbronn (DE); Langeloh, Thomas, Dr., 76126 Heidelberg (DE)
(74) Vertreter: Wunderlich, Rainer

(56) Entgegenhaltungen:
- FR-A1- 2 588 765
- US-A- 5 035 799

## Beschreibung

Die Erfindung betrifft eine Vorrichtung und ein Verfahren zur Rückspülfiltration, welche insbesondere zur Klarfiltration von Elektrolytlösungen bei der Hydrometallurgie, von Laugungsflüssigkeiten bei der Salz- und Kunstdüngerindustrie sowie in vielfältigen anderen Bereichen bei der Aufbereitung schwach feststoffbeladener Prozessflüssigkeft Anwendung finden.

Insbesondere in diesen Bereichen wird häufig ein voll automatisierter Filtrationsablauf gewünscht. Hierzu ist ein möglichst gleichmäßiger und besonders zuverlässiger Betrieb eines Filters notwendig. Für einen derartigen Betrieb ist insbesondere der Abwurf einer anfiltrierten Feststoffschicht - je nach Dicke auch Filterkuchen genannt - von maßgeblicher Bedeutung. Eine besonders zuverlässige Kuchenentfernung ist durch die Verwendung einer sogenannten Rückspülfiltration erreichbar. Bei einer Rückspülfiltration wird Flüssigkeit entgegen der Filtrationsrichtung durch das Filtermedium rückgespült, wodurch eine Kuchenablösung vom Filtermedium bewirkt wird.

Die US 5,035,799 offenbart eine Querstrom-Filteranordnung mit einem geschlossenen Kreislauf. Die Anordnung weist einen Einlass auf, durch den das zu filtrierende Fluid unter Druck in die Filteranlage eingeleitet wird, um über den Flächen des Filtermediums der Filterelemente eine turbulente Querströmung zu erzeugen. Die Filterelemente sind am unteren Ende jeweils mit einem Auslass versehen, der mit einer Vakuumquelle verbunden ist, um das Filtrat abzuführen. Das zu filtrierende Medium wird über einen Tank, der Öffnungen aufweist, auf die einzelnen Oberflächen der Filterelemente aufgegeben. Zudem weist die Filteranlage Gittereinrichtungen mit Fluiddurchgängen auf, die an dem Filtermedium anliegen, um eine turbulente Strömung zu erzeugen und ein übermäßige mechanische Belastung des Filtermediums während der Rückspülreinigungsvorgänge zu verhindern.

Es ist **Aufgabe** der Erfindung, ein Verfahren und eine Vorrichtung und zur Rückspülfiltration anzugeben, welche bei einem konstruktiv möglichst geringen Aufwand einen effizienten Filtrationsablauf ermöglichen.

Die Aufgabe wird zum einen durch ein Verfahren mit den Merkmalen des Anspruchs 1 und zum anderen durch eine Vorrichtung mit den Merkmalen des Anspruchs 3 gelöst.

Bevorzugte Ausführungsformen der Erfindung sind in den jeweils abhängigen Ansprüchen angegeben.

Gemäß der Erfindung umfasst eine Vorrichtung zur Rückspülfiltration mindestens ein Gehäuse, mindestens ein Filterelement, das in dem Filtergehäuse angeordnet und an eine Filtratableitung angeschlossen ist, eine Zuführeinrichtung zum Zuführen einer zu filtrierenden Suspension aus Flüssigkeit und Feststoff in das Gehäuse, einer Druckerzeugungseinrichtung zum Erzeugen einer Druckdifferenz, durch welche Flüssigkeit der Suspension in einer Filtrationsrichtung durch ein Filtermedium des Filterelementes treibbar und als Filtrat abführbar ist, während Feststoff der Suspension an dem Filtermedium anlagert, eine Rückspüleinrichtung, durch welche zum Lösen des angelagerten Feststoffes in bestimmten Zeitabständen Filtrat entgegen der Filtrationsrichtung durch das Filtermedium rückspülbar ist, und eine Abführeinrichtung zum Abführen von feststoffhaltigem Schlamm am Boden des Gehäuses. Über eine Filtratsammelvorrichtung kann das Filtrat unter Umständen ausgeschleust werden. Die Rückspüleinrichtung hat die Aufgabe, das Filtrat unter einem kontrollierten Rückspüldruck in die Filterelemente zu leiten und durch einen minimalen Rückspülfluss den Filterkuchen abzulösen. Der Rückspülvorgang kann mit Hilfe eines über den Filterelementen angeordneten und den hydrostatitischen Druck ausnützenden Hochtankes oder mit Hilfe eines unter Überdruck stehenden und mit einem geeigneten Rückspülventil ausgestatteten Filtratsammelbehälter oder mit Hilfe einer Pumpe oder mit Hilfe von Kombinationen der zuvor genannten Einrichtungen erfolgen.

Eine derartige Vorrichtung zur Rückspülfiltration kann insgesamt in einem druckdichten Filtergehäuse angeordnet werden. Das Filtergehäuse kann sowohl den Raum für die Filterelemente als auch den erfindungsgemäß konischen Raum für das Sammeln und Eindicken des abgeworfenen Filterkuchens umfassen. In einer weiteren Ausführung kann der abgeworfene Filterkuchen auch in einen separaten Behälter abgeleitet werden, der mit dem Filtergehäuse direkt verbunden ist und kommt in der Grundausführung weitgehend ohne wartungsanfällige bewegende, insbesondere drehende Bauteile und ohne Handhabungsmaßnahmen von außen aus. Diese ist daher gut in einen automatisierten Prozess integrierbar.

Grundsätzlich können für die erfindungsgemäße Vorrichtung verschiedenste Filterelemente zum Einsatz kommen, insbesondere aus gewellten Blechen aufgebaute Filterelemente oder zylindrische Filterkerzen, welche gegebenenfalls in Reihenanordnung vorgesehen sind. Besonders bevorzugt ist es jedoch nach der Erfindung, dass das mindestens eine Filterelement ein plattenförmiges Drainageelement mit innenliegenden Drainagekanälen und seitlichen Durchtrittsöffnungen aufweist und dass ein Filtermedium auf dem bevorzugt ebenen, flachen Drainageelement aufgespannt ist. Ein derartiges plattenförmiges Drainageelement hat eine einfache Geometrie und weitgehend ebene Seitenflächen, so dass dieses in einfacher Weise mit einem Filtermedium bespannt werden kann. Insbesondere kann das Filtermedium ein einfacher Filterbeutel sein, welcher mit guter Spannung auf das Drainageelement aufziehbar ist. Der Aufwand zur Konfektionierung des Filtermediums sinkt hierdurch erheblich.

Eine weitere Verbesserung ergibt sich nach der Erfindung dadurch, dass ein Aufsatzrahmen mit einer Struktur aus Streben vorgesehen ist, wobei das Filtermedium zwischen dem Aufsatzrahmen und dem plattenförmigen Drainageelement angeordnet ist. Dieser Aufsatzrahmen kann alternativ oder ergänzend verschiedene Funktionen erfüllen. Bei größeren plattenförmigen Drainageelementen dient der Aufsatzrahmen als Niederhalter, welcher das Filtermedium möglichst nah an den seitlichen Durchtrittsöffnungen auf das Drainageelement andrückt. Hierdurch wird beim Rückspülen eine übermäßige Aufweitung oder Ausbeulung des Filtermediums vermieden, was zu einer Verringerung der für die Rückspülung benötigten Filtratmenge führt. Weiterhin kann der Aufsatzrahmen als ein Distanzelement eingesetzt werden, welches zu beiden Seiten an benachbarten Filterelementen anliegt und so zuverlässig verhindert, dass beim gleichzeitigen Rückspülen benachbarter Filterelemente sich die aufgeweiteten Filtermedien gegenseitig behindern oder gar berühren. Weiterhin kann durch den Aufsatzrahmen mit etwa einer gitterartigen Anordnung von Streben eine gewünschte Segmentierung der Filterfläche erfolgen, so dass beim Rückspülen nur Filterkuchenstücke in bestimmter Größe anfallen können. Dies gewährleistet eine sichere Feststoffabfuhr und beugt Verstopfungen durch zu große Filterkuchenstücke vor.

Weiterhin ist es nach der Erfindung vorteilhaft, dass das plattenförmige DrainageElement weitgehend glattflächige Seitenflächen aufweist, in welchen Ausnehmungen oder Nuten für die Streben zum Aufsetzen des Aufsatzrahmens angeordnet sind. Durch eine derartige Anordnung von Nuten wird die Segmentierung der Filterfläche weiter verbessert. Insbesondere wird sichergestellt, dass der Aufsatzrahmen lagegenau auf einem oder zwei benachbarten Filterelementen aufgesetzt wird.

Weiter ist es erfindungsgemäß, dass ein mikroporöses Filtermedium, insbesondere eine Filtermembran vorgesehen ist. Aufgrund ihrer fragilen Struktur konnten bisher mikroporöse Filtermedien, sowohl flexible Filtermembrane als auch starre Platten, etwa aus Keramik, nicht an größeren Filterelementen für Rückspülfiltration zum Einsatz kommen, da der relativ hohe Rückspüldruck und die damit verbundene Ausbeulung zu einer nicht akzeptablen Gefahr eines Bruches oder Zerstörung des mikroporösen Filtermediums geführt hat. Bei der erfindungsgemäßen Anordnung insbesondere durch den Aufsatzrahmen kann jedoch ein Filtermedium mit einer sehr empfindlichen mikroporösen Struktur auch aus starren oder spröden Materialien zuverlässig zum Einsatz gebracht werden.

Grundsätzlich kann die Filtervorrichtung lediglich ein Filterelement aufweisen. Eine besonders wirtschaftliche Filtration wird jedoch erfindungsgemäß dadurch erreicht, dass eine Vielzahl von Filterelementen parallel zueinander angeordnet sind. Die parallele Anordnung der Filterelemente kann sich auf alle Filterelemente innerhalb des Gehäuses oder auf einen Teil oder eine Gruppe der Filterelemente beziehen. Grundsätzlich ist es im letzteren Fall möglich, dass Filterelemente jeweils gruppenweise parallel angeordnet sind, diese jedoch beispielsweise radial in einem zylindrischen Gehäuse zur Mittelachse hin ausgerichtet sind. In diesem Fall würde sich sozusagen eine windmühlenartige Anordnung der einzelnen Gruppen mit parallelen Filterelementen ergeben. Die parallele Anordnung von Filterelementen mit gleicher Größe sorgt gegenüber einer rein radialen Anordnung der Filterelemente in einem zylindrischen Gehäuse für definierte, gleichmä-βige Filtrations- und Strömungsverhältnisse zwischen den einzelnen Filterelementen. Dies führt zu einem gleichmäßigeren Filtrationsablauf und Filtrationsergebnis.

Eine besonders effiziente Montage und Wartung der Filterelemente wird erfindungsgemäß dadurch erreicht, dass mehrere Filterelemente zu einem Paket zusammengefasst und in einem Rahmen angeordnet sind. Dieser Rahmen kann mit Befestigungseinrichtungen versehen sein, etwa Haken oder Ösen, die ein einfaches Montieren und Demontieren des gesamten Paketes durch einen Kran erlauben. Dies erlaubt schnelle Wartungsvorgänge bei einer weiter hoch präzisen Anordnung der einzelnen Filterelemente zueinander.

Es ist erfindungsgemäß, dass mindestens ein Abschnitt im Gehäuse zum Bilden eines Suspensionspufferbereiches abgegrenzt ist. Auf diese Weise können ein oder mehrere vertikale kaminartige Bereiche zwischen den Filterelementen in einem vertikal ausgelegten Gehäuse vorgesehen sein, durch welche über eine obere und untere Horizontalverbindung ein vertikaler Strömungskreislauf in dem Gehäuse zwischen den Filterelementen einstellbar ist. Ein derartiger Kreislauf der Rohsuspension wird so eingestellt, dass die abgegrenzten Vertikalabschnitte zwischen den Filterelementen zumindest beim Rückspülen definiert mit einer in Schwerkraftrichtung gerichteten Strömung durchlaufen werden, so dass ein Abwerfen des Filterkuchens von den Filterelementen und ein Absetzen der Feststoffbestandteile in Sedimentationsrichtung verbessert und beschleunigt wird. Eine definierte vertikale Rückströmung nach oben ist dabei durch die hiervon abgegrenzten Vertikalabschnitte im Gehäuse vorgesehen. In einer weiteren Ausführungsvariante kann ein Teilstrom der Rohsuspension im unteren Teil an einer geeigneten Stelle des Gehäuses abgeführt und mit der Originalsuspension im oberen Teil des Gehäuses wieder zugeführt werden. Vorzugsweise sind Größe und Volumen zur Pufferung so ausgelegt, dass Flüssigkeit mit angereicherten Feststoffbestandteilen von unterhalb der Filterelemente nicht erneut oberhalb der Filterelemente an diese geleitet werden.

Eine weitere Erhöhung der Filtrationseffizienz wird erfindungsgemäß dadurch erreicht, dass Filterelemente in einem Horizontalbereich zu einem Modul zusammengefasst sind und dass mindestens zwei Module vertikal übereinander in dem Gehäuse angeordnet sind. Die Module können aus einem oder mehreren der oben beschriebenen Pakete aufgebaut sein. Es ergibt sich somit eine in vertikaler Richtung etagenweise Anordnung der Filterelemente, so dass sehr hohe Filterflächen in einem Gehäuse erzielbar sind. Vorteilhaft ist insbesondere, dass auch in großen Gehäusen die Filterfläche je Filterelement nicht zu groß wird, so dass ein effizientes Filtrieren mit gewünschtem Drücken erreichbar ist. Die Aufteilung der Gesamtfilterfläche in eine Anzahl solcher Module erlaubt ein zeitlich fein abgestuftes aufeinanderfolgendes Durchlaufen der einzelnen Filtrationszyklen in den Modulen und somit eine gewünschte Vergleichsmäßigung des Filtratstromes.

Zur gleichmäßigen Zuführung der Rückspülflüssigkeit (Filtrat) ist es vorteilhaft, die Filterelemente bzw. deren oberen Austritt mit einem mehrere Filterelemente umfassenden Sammelraum zu verbinden. Auf diese Weise wird die Rückspülflüssigkeit weitgehend gleichmäßig und unter Vermeidung von Druckverlusten aus Rohrleitungen, etc. in die Filterelemente rückgeführt.

Die eingangs genannte Aufgabe wird weiter durch ein Verfahren zur Rückspülfiltration gelöst, wobei eine Suspension aus Flüssigkeit und Feststoff in ein Gehäuse mit mindestens einem Filterelement eingeleitet wird, durch Anlegen eines Differenzdruckes Flüssigkeit in einer Filtrationsrichtung durch ein Filtermedium des Filterelementes hindurchgetrieben und als Filtrat abgeführt wird, während sich Feststoff an dem Filtermedium anlagert, in bestimmten Zeitabständen Filtrat entgegen der Filtrationsrichtung durch das Filtermedium rückgespült wird und dabei angelagerter Feststoff vom Filtermedium abgelöst wird, und feststoffhaltiger Schlamm am Boden des Gehäuses abgeführt wird. Das Filtrat kann in einen Sammelraum unter Umgebungsdruck, unter Vakuum oder unter Überdruck abgeführt werden. Die Ableitung des Filtrats in einen Überdruckraum erlaubt den Betrieb der Rückspülfiltration auf einem insgesamt erhöhten Druckniveau, so dass das Filtrat auf Grund des erhöhten Drucks auch auf einem erhöhten Temperaturniveau gehalten werden kann, ohne dass Siedevorgänge hervorgerufen werden.

Durch dieses erfindungsgemäße Verfahren zur Rückspülfiltration werden die Vorteile erreicht, die vorausgehend im Zusammenhang mit der erfindungsgemäßen Vorrichtung beschrieben wurden.

Eine kontinuierliche oder zumindest quasi kontinuierliche Filtration wird erfindungsgemäß dadurch erreicht, dass mehrere Filterelemente vorgesehen sind, an welche jeweils zu unterschiedlichen Zeitpunkten die Druckdifferenz angelegt und das Rückspülen durchgeführt wird. Während also ein Teil der Filterelemente bei anliegender Druckdifferenz filtriert, kann bei dem anderen Teil der Filterelemente die Druckdifferenz geändert und ein Rückspülen entgegen der Filtrationsrichtung durchgeführt werden. Auf diese Weise läuft die Gesamtvorrichtung mit den eingestellten Strömungsverhältnissen weiter, auch wenn ein Teil der Filterelemente zurückgespült wird. Zu vorgegebenen Zeitpunkten können dann auch die anderen Filterelemente rückgespült werden, während die bereits freigespülten Filterelemente die Filtrationsleistung aufbringen. Je nach Anzahl und Aufteilung der Filterelemente kann so für lange Zeiträume eine unterbrechungsfreie Filtration mit hoher Effizienz erzielt werden.

Ein quasi kontinuierlicher Filtrationsablauf kann erfindungsgemäß dadurch erreicht werden, in dem die Filterelemente oder Filterelementpakete individuell intern etwa auf eine gemeinsame Mündungsscheibe verrohrt und über ein kontinuierlich oder absatzweise rotierendes Steuerelement mit den einzelnen Verfahrensteilprozessen, wie z. B. Kuchenbildung, Kuchenabnahme, Rückspülen, etc., verbunden werden.

Eine Verbesserung des Ablösens des Filterkuchens wird erfindungsgemäß noch dadurch erreicht, dass während des Rückspülens zusätzlich eine Querströmung entlang der Oberfläche der Filterelemente in einer Sedimentationsrichtung erzeugt wird. Die Querströmung unterstützt das Ablösen des Filterkuchens während des Rückspülvorganges und beschleunigt gleichzeitig das Sedimentieren der abgelösten Feststoffbestandteile.

Die Effizienz der erfindungsgemäßen Rückspülfiltration beruht im wesentlichen auf:
- Filtration der Rohsuspension mit weitestgehender Ausschaltung des Risikos, dass bereits anfiltrierter und abgeworfener Feststoff wieder anfiltriert wird
- Eine Überlagerung der Kuchenfiltration mit einer Art Querstromfiltration
- Einer beschleunigten Ableitung des abgeworfenen Filterkuchens aus dem Filtrationsbereich zwischen den Filterelementen durch eine der Sedimentation überlagerte Strömung
- Der Gestaltung von ebenen Filterflächen und somit ebenen Filterkuchen
- Dem Design von Filterelementen mit einer Multianordnung von Filterkanälen pro Element
- Eine Minimierung des Ausbeulvolumens des Filtermediums durch von außen aufgebrachte, das Filtermedium andrückende und dichtende Distanzelemente
- Eine vorzugsweise parallele Anordnung der Filterelemente und Anordnung der parallelen Filterelemente in Paketen.
- Die Schaffung von internen Puffervolumen zur Zuführung der Suspension, zur Aufnahme von abgestoßenem Filterkuchen oder zur Erzeugung von Strömungen

Die Erfindung wird nachfolgend anhand von bevorzugten Ausführungsbeispielen weiter beschrieben, welche stark schematisiert in den beiliegenden Zeichnungen dargestellt sind. In den Figuren zeigen:
- Fig. 1: eine schematische Anschlussanordnung einer erfindungsgemäßen Filtervorrichtung;
- Fig. 2: einen schematischen grundsätzlichen Aufbau einer erfindungsgemäßen Filtervorrichtung;
- Fig. 3: eine erste erfindungsgemäße Ausführungsform einer etagenweisen Modulanordnung;
- Fig. 4: eine zweite erfindungsgemäße Ausführungsform einer etagenweisen Modulanordnung;
- Figuren 5a bis 5f: schematische Draufsichten auf erfindungsgemäße Filtervorrichtungen mit unterschiedlichen Anordnungen der Filterelemente;
- Figuren 6a bis 6d: den grundsätzlichen Aufbau eines Drainageelementes nach der Erfindung in verschiedenen Ansichten;
- Fig. 7: eine perspektivische Ansicht eines erfindungsgemäßen Filterelementes mit Distanzelementen
- Fig. 8: eine Detaillansicht eines erfindungsgemäßen Filterelementes mit Distanzelementen
- Fig. 9: ein schematischer Aufbau eines Aufsatzrahmens nach der Erfindung;
- Fig. 10: eine schematische Darstellung zur Wirkungsweise des Aufsatzrahmens;
- Fig. 11: eine schematische Ansicht zur Befestigung eines Filtermediums am Drainageelement;
- Fig.12: eine schematische Ansicht einer weiteren Befestigungsmöglichkeit des Filtermediums am Drainageelement;
- Figuren 13a und 13b: eine weitere Ausführungsform eines erfindungsgemäßen Filterelementes in verschiedenen Ansichten;
- Fig. 14: eine Seitenansicht zu einer möglichen Parallelanordnung der Filterelemente nach der Erfindung;
- Fig. 15: eine schematische Darstellung einer erfindungsgemäßen Paketanordnung;
- Fig. 16: eine perspektivische Ansicht eines Gehäuses nach der Erfindung;
- Fig. 17: eine Draufsicht auf eine erfindungsgemäße Filtervorrichtung mit Suspensionszuführung ;
- Fig. 18: eine schematische Detaillansicht zur Suspensionszuführung.

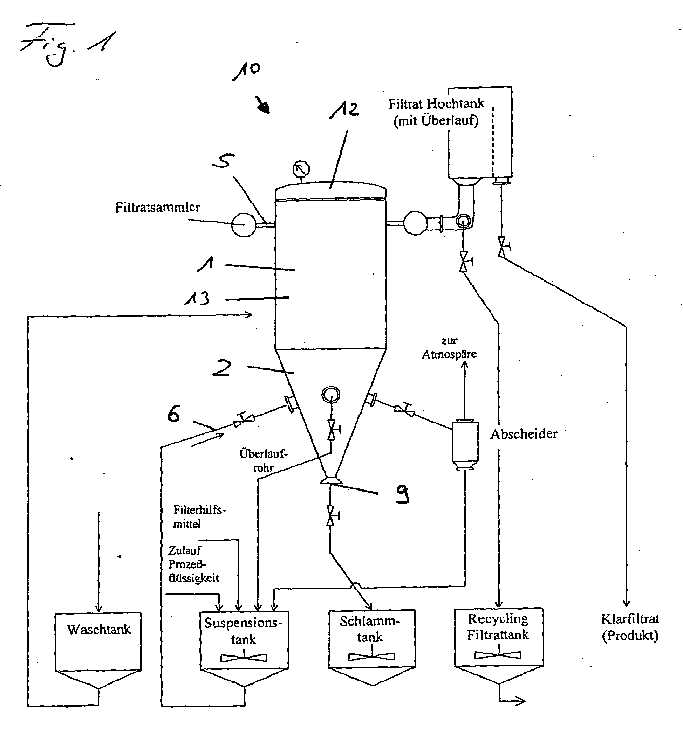

Die Anordnung einer erfindungsgemäßen Filtrationsvorrichtung 10 ist in Fig. 1 gezeigt. Ein Gehäuse 1 der Vorrichtung 10 weist einen mittigen Zylinderbereich 13 auf, welcher oben durch einen lösbaren Deckel 12 und unten durch einen Konus 2 als Boden abgeschlossen ist. Über eine Zuführeinrichtung 6 wird Suspension aus einem Suspensionstank in das Gehäuse 1 eingeleitet. Gleichzeitig besteht die Möglichkeit, ein Waschfluid aus einem Waschtank ebenfalls zuzuführen. Feststoffentreichertes Filtrat wird in einem oberen Bereich über eine Filtratableitung 5 zu einem Hochtank mit Überlauf abgeführt, aus welchem das Klarfiltrat als Produkt abgezogen werden kann. Zwischen dem Gehäuse 1 und dem Hochtank kann Filtrat zu einem Recyling-Filtrattank geleitet werden.

Zur Feststoffabfuhr ist am unteren Ende des Konus 2 eine Abführeinrichtung 9 vorgesehen, durch welche feststoffangereicherter Schlamm in einen Schlammtank abführbar ist. Mittels einem Überlauf 8 kann überschüssig eingeleitete Suspension im Bereich des Konus 2 gegebenenfalls über einen zur Atmosphäre entlüftenden Abscheider in den Suspensionstank rückgeführt werden. Der Suspensionstank enthält die Prozessflüssigkeit, zu der gegebenenfalls Filterhilfsmittel beigemengt werden können.

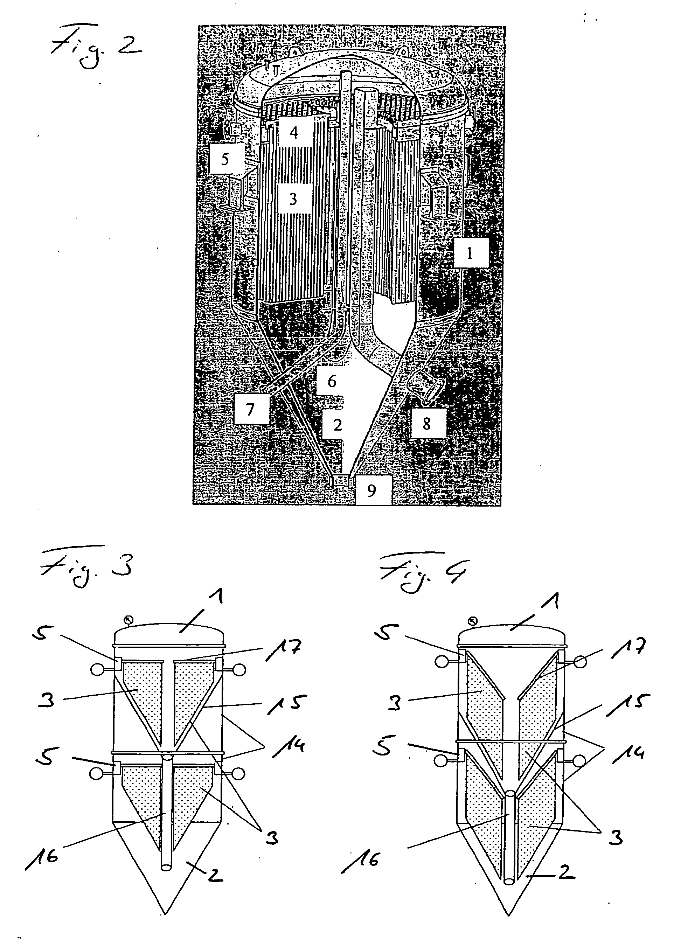

Gemäß Fig. 2 ist die Zuführeinrichtung 6 für die Suspension ein Rohr, welches sich vom Konus 2 etwa mittig bis zum oberen Bereich des Gehäuses 1 erstreckt. In vertikaler Richtung über die Mündung der Zuführeinrichtung 6 hinaus erstreckt sich eine rohrförmige Entlüftung 7, welche im Bereich des Konus 2 zur Außenseite hin entlüftet und gegebenenfalls mit dem Abscheider verbunden sein kann. Vertikal unterhalb der Zuführeinrichtung 6 mündet der rohrförmige Überlauf 8, welcher ebenfalls im Bereich des Konus 2 aus dem Gehäuse 1 austritt und überschüssig eingeleitete Suspension zum Suspensionstank rückführen kann.

Im Wesentlichen im Zylinderbereich 13 des Gehäuses 1 sind eine Vielzahl von Filterelementen 3 angeordnet, welche Filtrat über ihren jeweils oberen Bereich über eine Filtratableitung 5 nach außen führen.

In den Figuren 3 und 4 ist die etagenweise Anordnung von zu Modulen zusammengestellten Filterelementen 3 dargestellt. Zur Leistungsanpassung ist das Gehäuse 1 jeweils aus mehreren Zylindersegmenten 14 aufgebaut, in vorliegendem Beispiel aus jeweils zwei Zylindersegmenten 14. Diese vertikale Vergrößerung des Gehäuses 1 erlaubt eine mehrstöckige Anordnung von Filterelementen 3, die an ihrer Oberkante jeweils einen Filterelementkranz 17 aufweisen. Die einzelnen Module weisen jeweils eine separate ringförmige Filtratableitung 5 auf, welche außerhalb des Gehäuses 1 zusammengeführt werden können.

Zur Feststoffableitung der oberen Etage ist ein Zwischenkonus 15 vorgesehen, welcher sedimentierten Feststoff aufgrund seiner Steilheit zu einem rohrförmigen Zwischenabzug 16 leitet, der im unteren Konus 2 mündet. So kann der Feststoff von beiden Etagen über den Konus 2 abgeführt werden. Die Filterelemente 3 gemäß Fig. 3 sind etwa dreiecksförmig gestaltet, während die Filterelemente 3 gemäß Fig. 4 eine parallelogrammförmige Anordnung aufweisen. Hierdurch kann eine noch bessere Ausnutzung des Gehäusevolumens erreicht werden.

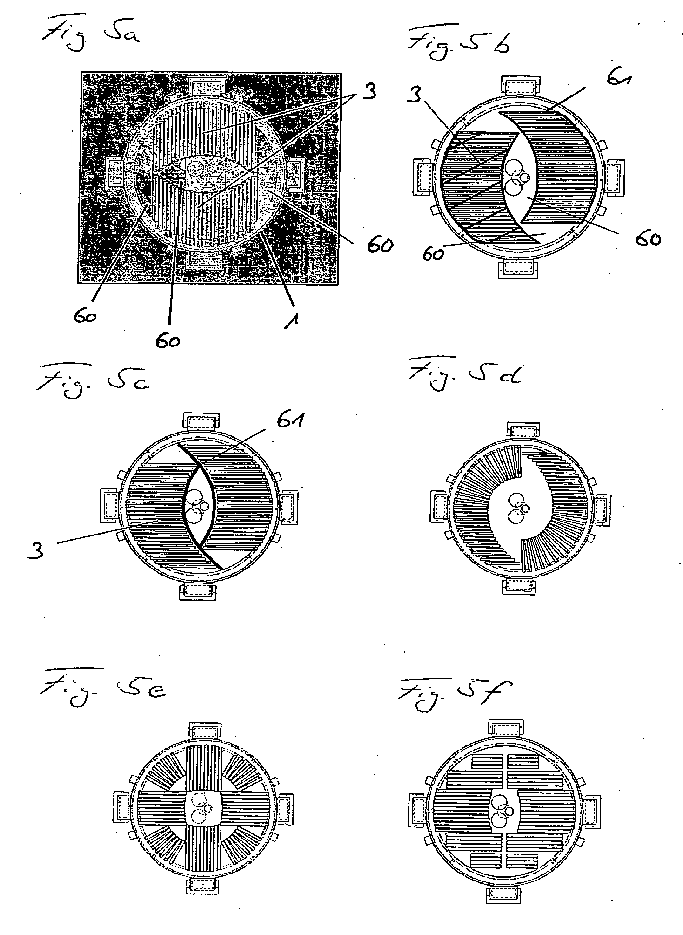

Die Figuren 5a bis 5f zeigen verschiedene Anordnungsmöglichkeiten einer zumindest teilweisen Parallelanordnung der Filterelemente 3 in einem zylindrischen Gehäuse 1. Die Ausführungsform von Fig. 5a zeigt eine flügelartige Parallelanordnung von in horizontaler Richtung gleichlang ausgebildeten Filterelementen 3, welche sich zumindest bereichsweise mit ihren Randseiten entlang der Innenwand des Gehäuses 1 ausrichten. Hierdurch entstehen zwei seitliche kreissegmentartige und ein mittiger augenförmiger freier Vertikalabschnitt 60, welche für Rohr- und Strömungsleitungen genützt werden können.

Fig. 5b zeigt eine ähnliche Anordnung zu Fig. 5a, wobei jedoch die beiden flügelartigen Bereiche versetzt zueinander angeordnet sind, wobei eine noch bessere Raumausnutzung erzielbar ist. Zudem sind die einzelnen paketweise angeordneten Filterelemente 3 jeweils von einer Trennwand 61 abgegrenzt, so dass diese gegenüber den Vertikalabschnitten 60 abgeschlossen sind.

Alternativ können die Trennwände 61 auch lediglich entlang der Innenbereiche der paketweise angeordneten Filterelemente 3 angeordnet sein, wie Fig. 5c zeigt.

Eine besonders gute Raumausnützung wird auch durch die Anordnung gemäß Fig. 5d erreicht, wobei weiter zwei flügelartige Anordnungen der Filterelemente 3 gegeben sind, wobei innerhalb der flügelartigen Anordnung lediglich ein Teil der Filterelemente 3 parallel zueinander angeordnet ist, während der andere Teil radial zur Mittenachse des Gehäuses 1 ausgerichtet sind.

In Fig. 5e ist eine windmühlenartige Anordnung mit größeren Filterelementen 3 gezeigt, welche parallel in Kreuzform zueinander angeordnet sind, während in den verbliebenen Zwischenräumen kleinere Filterelemente 3 mit Radialausrichtung vorgesehen sind.

In Fig. 5f ist eine vollständige Parallelanordnung mit insgesamt drei unterschiedlichen Größen von Filterelementen 3 vorgesehen.

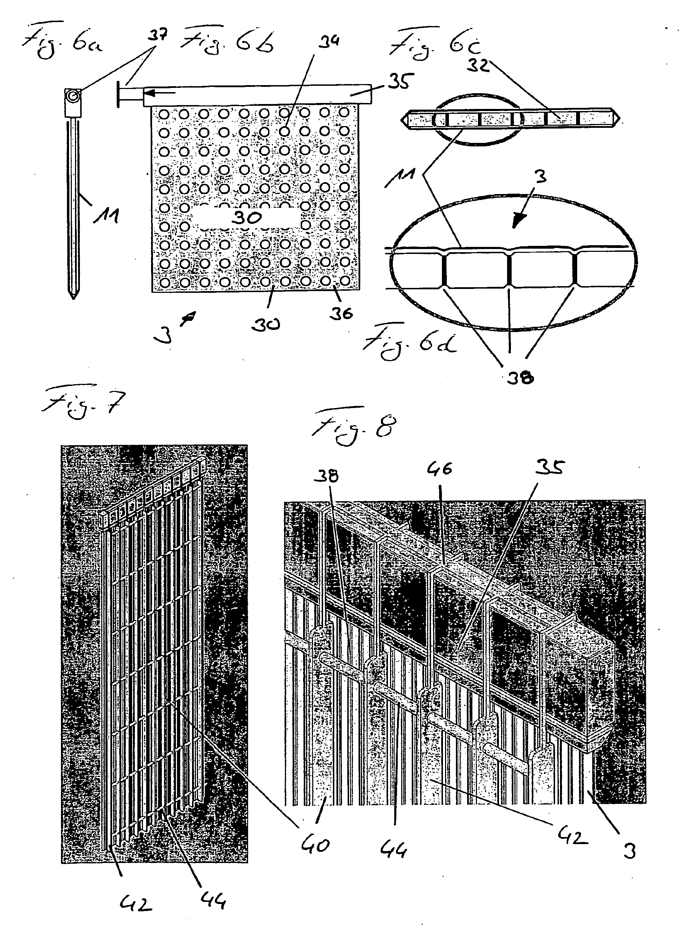

Die Figuren 6a bis 6d zeigen ein erfindungsgemäßes Filterelement 3 mit einem rechteckig aufgebauten Drainageelement 30, welches weitgehend glatte Seitenflächen 36 aufweist. In den Seitenflächen 36, welche durch ein Lochblech gebildet sind, sind eine Vielzahl gleichförmig angeordneter kreisrunder Drainageöffnungen 34 vorgesehen, welche in vertikal angeordneten, voneinander getrennten Drainagekanälen 32 münden, die in den Querschnittsansichten von Fig. 6c dargestellt sind. Die Drainagekanäle 32 münden am oberen Bereich des plattenförmigen Drainageelementes 30 in einen Sammelkanal, welcher über einen seitlichen Anschlussstutzen 37 mit der Filtratableitung am Gehäuse verbindbar ist.

Auf das plattenförmige Drainageelement 30 kann ein Filtermedium 11, insbesondere ein einfach zu konfektionierendes Filtertuch oder eine Filtermembran in Beutelform, aufgespannt werden, wie der Seitenansicht von Fig. 6a zu entnehmen ist. Zur besseren Fixierung des Filtermediums 11 auf dem Drainageelement 30 können in den Seitenfläche 36 zwischen den Drainageöffnungen 34 nutenförmige Ausnehmungen 38 vorgesehen sein, wie der vergrößerten Detaillansicht von Fig. 6d zu entnehmen ist.

Diese Ausnehmungen 38 dienen insbesondere zur lagegenauen Anordnung eines Aufsatzrahmens 40, welcher in den Figuren 7 bis 9 näher dargestellt ist. Der Aufsatzrahmen 40 ist gitterförmig aus Vertikalstreben 42 und Querstreben 44 aufgebaut, wie Fig. 7 zu entnehmen ist. Die Vertikalstreben 42 sind bei dem dargestellten Ausführungsbeispiel als Distanzelemente dienende Platten, während die Querstreben durchmesserkleinere Stangen aufweisen, so dass der Aufsatzrahmen 40 eine Strömung in vertikaler Richtung entlang dem Filterelement 3 zulässt, jedoch nicht in Querrichtung.

Wie aus Fig. 8 zu ersehen ist, kann der Aufsatzrahmen 40 über eine hakenförmige Aufhängeeinrichtung 46 am Sammelkanal 35 eines Filterelementes in einfacher Weise befestigt werden. Die sich vertikal erstreckenden nutenförmigen Ausnehmungen 38 können zur lagegenauen Halterung des Aufsatzrahmens 40 am Filterelement 3 dienen.

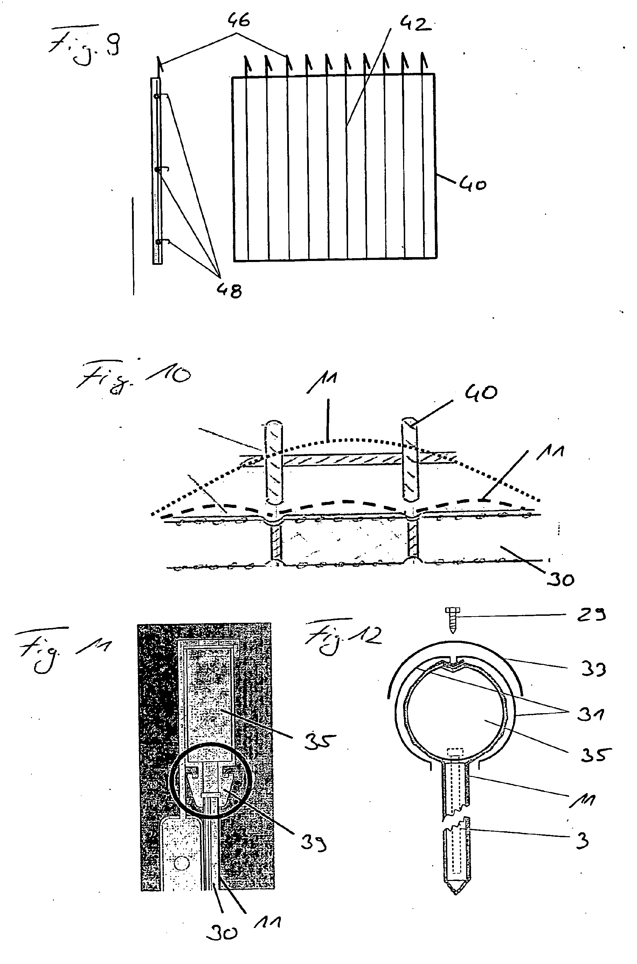

Fig. 9 zeigt stark schematisiert die Anordnung eines Aufsatzrahmens 40 mit der oben angeordneten Aufhängeeinrichtung 46, den Vertikalstreben 42 sowie zusätzlich vorgesehenen hakenförmigen Seitenbefestigungen 48, mit welchen der Aufsatzrahmen 40 zuverlässig am Filterelement befestigt werden kann.

In Fig. 10 ist eine Wirkungsweise des Aufsatzrahmens 40 anschaulich verdeutlicht. Bei der betriebsgemäßen Rückspülung zum Abwerfen der Feststoffanlagerung auf einem Filtermedium 11 wird dieses vom Drainageelement 30 abgehoben. Je stärker die Abhebung des Filtermediums 11 vom Drainageelement 30 ist, umso mehr Filtrat wird zur Rückspülung benötigt. Zur Rückspülung benötigtes Filtrat steht als filtriertes Produkt nicht mehr zur Verfügung, so dass die Rückspülmenge die Leistung der Filtervorrichtung verschlechtert. In gepunkteter Linie ist die Aufweitung des Filtermediums 11 ohne Aufsatzrahmen 40 dargestellt. In gestrichelter Linie ist die Aufweitung des Filtermediums 11 bei Einsatz eines Aufsatzrahmens 40 gezeigt. Hieraus geht anschaulich hervor, dass eine erheblich geringere Aufweitung des Filtermediums 11 durch den Aufsatzrahmen 40 und damit eine erhebliche Einsparung an Filtrat bei der Rückspülung erreicht wird.

Fig. 11 zeigt die Befestigung und Abdichtung eines beutelförmigen Filtermediums 11 am oberen Ende des Drainagekörpers 30 direkt unterhalb des Sammelkanals 35. Dort ist ein spezielles Metallprofil 39 am Drainageelement 30 umlaufend befestigt. Das Filtermedium 11 wird am Rande mit einem Gummiprofil bestückt. Dieses Gummiprofil wird in das Metallprofil 39 eingelegt und mittels einer Stemmschnur fixiert.

Fig. 12 zeigt die Befestigung eines Filtermediums 11 am Sammelkanal 35 eines Filterelementes 3, wobei Endbereiche des beutelförmigen Filtermediums 11 den im Querschnitt kreisförmigen Sammelkanal 35 umschlingen und mittels Klammern 31, 33 sowie Schraube 29 befestigt werden.

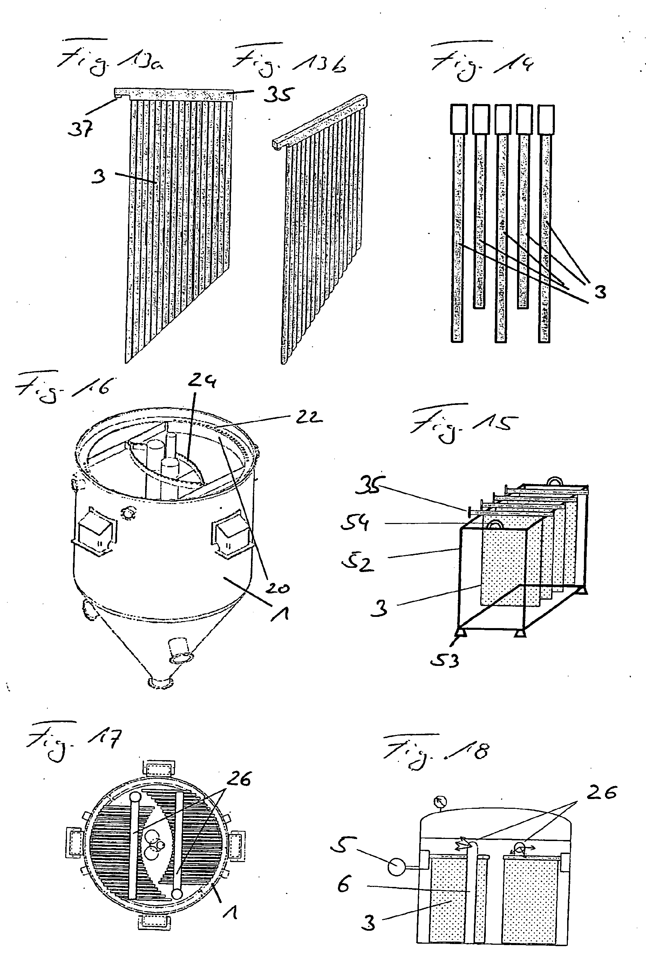

In den Figuren 13a und 13b ist nochmals die Anordnung eines Filterelementes 3 gezeigt, deren Unterkante an einen Konus 2 durch einen schrägen Verlauf angepasst ist. Hierdurch kann ein zur Verfügung stehendes Gehäusevolumen noch besser genutzt werden. Gleichzeitig ist am Sammelkanal 35 ein Auslassstutzen 37 für das Filtrat derart ausgebildet, dass der Auslassstutzen 37 lediglich auf einen Horizontalkanal aufgesetzt werden kann.

Gemäß der Seitenansicht von Fig. 14 können parallel angeordnete Filterelemente 3 in vertikaler Richtung eine unterschiedliche Länge aufweisen. Dies kann das Entfernen des Filterkuchens unterstützen und verhindert das Auftreten von Verstopfungen zwischen den parallel angeordneten Filterelementen 3.

Eine weitere Ausführungsform eines erfindungsgemäßen Gehäuses 1 mit einer Einrichtung zum einfachen Einhängen der Filterelemente 3 ist in Fig. 16 gezeigt. Hierzu ist ein ringförmiger Filtratkanal 20 horizontal entlang der Innenseite des Gehäuses angeordnet. An seiner Oberseite sind Aufnahmebohrungen 22 vorgesehen, in welche die in Fig. 13a dargestellten Auslassstutzen 37 passend eingesetzt werden können. Korrespondierend hierzu sind im Mittenbereich des Gehäuses Stützbleche 24 vorgesehen, in welchen die gegenüberliegende Seite eines Filterelementes 3 eingehängt werden kann.

Eine weitere bevorzugte Anordnung von mehreren Filterelementen 3 in einem Rahmen 52 mit Standfüßen 53 ist in Fig. 15 gezeigt. In dem etwa rechteckigen Rahmen können die einzelnen Filterelemente 3 parallel zueinander mit ihren oben liegenden Sammelkanälen 35 eingehängt werden. Zur besseren Montage weist der Rahmen 52 Ösen als Hebeeinrichtung 54 auf.

In den Figuren 17 und 18 sind zur besseren Zuführung von Suspension am oberen Bereich der Filterelemente 3 in dem Gehäuse 1 zwei Querkanäle 26 der Zuführeinrichtung 6 vorgesehen. Hierdurch kann eine gleichmäßige Verteilung und Beströmung der einzelnen Filterelemente 3 mit frischer Suspension sichergestellt werden. Die Ableitung des gereinigten Filtrats erfolgt in bekannter Weise über eine Filtratableitung nach außen.

## Patentansprüche

1. Verfahren zur filterkuchenbildenden Filtration mit Rückspülung mit einer Vorrichtung (10), wobei
- eine Suspension aus Flüssigkeit und Feststoff über eine Zuführeinrichtung (6) in ein Gehäuse (1) mit mehreren, vertikal angeordneten Filterelementen (3) eingeleitet wird,
- durch Anlegen eines Differenzdruckes mittels einer Druckerzeugungseinrichtung Flüssigkeit in einer Filtrationsrichtung durch ein Filtermedium (11) des Filterelementes (3) hindurchgetrieben und als Filtrat zu einem Sammelraum abgeführt wird, während sich Feststoff als Filterkuchen an dem Filtermedium (11) anlagert, und
- in bestimmten Zeitabständen Filtrat mittels einer Rückspüleinrichtung entgegen der Filtrationsrichtung durch das Filterelement (3) rückgespült wird und dabei angelagerter Filterkuchen vom Filtermedium (11) abgelöst wird,
**dadurch gekennzeichnet,**
- **dass** der abgelöste Filterkuchen nach unten in einen Konus (2) am Boden des Gehäuses (1) sedimentiert und über eine Abführeinrichtung (9) an der Spitze des nach unten gerichteten Konus (2) als feststoffhaltiger Schlamm abgeführt wird,
- **dass** die Filterelemente (3) über einen oberen Austritt mit dem Sammelraum verbunden sind und zum Rückspülen Filtrat aus dem Sammelraum über den oberen Austritt in die Filterelemente (3) rückgeführt wird,
- dass in dem Gehäuse zwischen den Filterelementen mehrere vertikale, kaminartige Bereiche angeordnet sind, die über eine obere und untere Horizentalverbindung verbunden sind,
und
- **dass** nur beim Rückspülen ein vertikaler Strömungskreislauf in dem Gehäuse (1) zwischen den Filterelementen (3) eingestellt wird, wobei ein Absetzen des Feststoffes in Schwerkraftrichtung beschleunigt wird.

2. Verfahren nach Anspruch 1,
**dadurch gekennzeichnet,**
**dass** mehrere Filterelemente (3) vorgesehen sind, an welchen jeweils zu unterschiedlichen Zeitpunkten die Druckdifferenz angelegt und das Rückspülen durchgeführt wird.

3. Vorrichtung (10) zur filterkuchenbildenden Filtration mit Rückspülung nach einem Verfahren nach Anspruch 1 oder 2, mit
- mindestens einem Gehäuse (1),
- mehreren vertikal angeordneten Filterelementen (3), die in dem Gehäuse (1) angeordnet und an einen Sammelraum für Filtrat angeschlossen sind,
- einer Zuführeinrichtung (6) zum Zuführen einer zu filtrierenden Suspension aus Flüssigkeit und Feststoff in das Gehäuse (1),
- einer Druckerzeugungseinrichtung zum Erzeugen einer Druckdifferenz, durch welche Flüssigkeit der Suspension in einer Filtrationsrichtung durch ein Filtermedium (11) des Filterelementes (3) treibbar und als Filtrat abführbar ist, während Feststoff der Suspension an dem Filtermedium (11) als Filterkuchen anlagert, und
- einer Rückspüleinrichtung, durch welche zum Lösen des angelagerten Filterkuchens in bestimmten Zeitabständen Filtrat entgegen der Filtrationsrichtung durch das Filtermedium (11) rückspülbar ist,
**dadurch gekennzeichnet,**
- **dass** am Boden des Gehäuses (1) ein Konus (2) ausgebildet ist, an dessen nach unten gerichteter Spitze eine Abführeinrichtung (9) zum Abführen von feststoffhaltigem Schlamm angeordnet ist,
- **dass** die Filterelemente (3) über einen oberen Austritt mit dem Sammelraum verbunden sind,
- **dass** zum Rückspülen Filtrat aus dem Sammelraum über den oberen Austritt in die Filterelemente (3) zuführbar ist und
- **dass** in dem Gehäuse (1) zwischen den Filterelementen (3) mehrere vertikale, kaminartige Bereiche angeordnet sind, die zum Einstellen eines vertikalen Strömungskreislaufes beim Rückspülen über eine obere und untere Horizontalverbindung verbunden sind.

4. Vorrichtung nach Anspruch 3,
**dadurch gekennzeichnet,**
**dass** das mindestens eine Filterelement (3) ein plattenförmiges Drainageelement (30) mit innenliegenden Drainagekanälen (32) und seitlichen Durchtrittsöffnungen (34) aufweist, und
**dass** ein Filtermedium (11) auf dem Drainageelement (3) aufgelegt ist.

5. Vorrichtung nach Anspruch 4,
**dadurch gekennzeichnet,**
**dass** ein Aufsatzrahmen (40) mit einer Struktur aus Streben (42, 44) vorgesehen ist, wobei das Filtermedium (11) zwischen dem Aufsatzrahmen (40) und dem plattenförmigen Drainageelement (30) angeordnet ist.

6. Vorrichtung nach Anspruch 5,
**dadurch gekennzeichnet,**
**dass** das plattenförmige Drainageelement (30) weitgehend glattflächige Seitenflächen (36) aufweist, in welchen Ausnehmungen (38) für die Streben (42, 44) zum Aufsetzen des Aufsatzrahmens (40) angeordnet sind.

7. Vorrichtung nach einem der Ansprüche 3 bis 6,
**dadurch gekennzeichnet,**
**dass** ein mikroporöses Filtermedium oder ein Filtermedium mit einer geeigneten Oberflächenbehandlung zur Erzeugung einer gleichartigen Abscheideeffizienz (11), insbesondere eine Filtermembran vorgesehen ist.

8. Vorrichtung nach einem der Ansprüche 3 bis 7,
**dadurch gekennzeichnet,**
**dass** eine Vielzahl von Filterelementen (3) parallel zueinander angeordnet sind.

9. Vorrichtung nach einem der Ansprüche 3 bis 8,
**dadurch gekennzeichnet,**
**dass** mehrere Filterelemente (3) zu einem Paket (50) zusammengefasst und in einem Rahmen (52) angeordnet sind.

10. Vorrichtung nach einem der Ansprüche 3 bis 9,
**dadurch gekennzeichnet,**
**dass** Filterelemente (3) in einem Horizontalbereich zu einem Modul (70) zusammengefasst sind und
**dass** mindestens zwei Module (70) vertikal übereinander in dem Gehäuse angeordnet sind.

## Claims

1. Method for filter cake forming filtration with backwash having a device (10),
wherein
- a suspension consisting of liquid and solid matter is introduced via a supply device (6) into a housing (1) comprising several vertically arranged filter elements (3),
- through the application of differential pressure by means of a pressure generating device liquid is driven in a direction of filtration through a filter medium (11) of the filter element (3) and is discharged to a collecting space as a filtrate, while solid matter deposits on the filter medium (11) as a filter cake, and
- within certain time intervals filtrate is backwashed by means of a backwash device through the filter medium (11) in a direction opposite to that of the direction of filtration and in doing so deposited filter cake is removed from the filter medium (11),
**characterized in that**
- the removed filter cake sediments downwards into a cone (2) at a bottom of the housing (1) and is discharged as sludge containing solid matter by means of a discharge device (9) at the peak of the downwards directed cone (2),
- the filter elements (3) are connected with the collecting space via an upper outlet and for backwashing filtrate from the collecting space is redirected via the upper outlet into the filter elements (3),
- in the housing between the filter elements several vertical chimney-like portions are arranged, which are connected via an upper and lower horizontal connection, and
- in the housing (1) between the filter elements (3) a vertical flow circulation is set only during backwash, a sedimentation of the solid matter in the direction of gravity being accelerated.

2. Method according to claim 1,
**characterized in that**
several filter elements (3) are provided, to which the pressure difference is applied and on which the backwashing is carried out at respectively different points in time.

3. Device (10) for filter cake forming filtration with backwash according to a method of claim 1 or 2, comprising
- at least one housing (1),
- several vertically arranged filter elements (3) which are arranged in the housing (1) and connected to a collecting space for filtrate,
- a supply device (6) for supplying a suspension to be filtered that consists of liquid and solid matter into the housing (1),
- a pressure generating device for generating a pressure difference, through which liquid of the suspension can be driven in a direction of filtration through a filter medium (11) of the filter element (3) and can be discharged as a filtrate, while solid matter of the suspension deposits on the filter medium (11) as filter cake, and
- a backwashing device, through which filtrate can be backwashed within certain time intervals through the filter medium (11) in a direction opposite that of the direction of filtration in order to remove the deposited filter cake,
**characterized in that**
- at a bottom of the housing (1) a cone (2) is provided, a discharge device (9) being arranged at a downwards directed peak of the cone (2),
- the filter elements (3) are connected with the collecting space via an upper outlet,
- for backwashing filtrate from the collecting space can be directed into the filter elements (3) via the upper outlet, and
- in the housing (1) between the filter elements (3) several vertical, chimney-like portions are arranged, which are connected via an upper and lower horizontal connecting for setting a vertical flow circulation during backwash.

4. Device according to claim 3,
**characterized in that**
the at least one filter element (3) includes a plate-shaped drainage element (30) with internally disposed drainage channels (32) and lateral openings (34), and
a filter medium (11) is applied onto the drainage element (30).

5. Device according to claim 4,
**characterized in that**
a mounting frame (40) with a structure consisting of struts (42, 44) is provided, wherein the filter medium (11) is arranged between the mounting frame (40) and the plate-shaped drainage element (30).

6. Device according to claim 5,
**characterized in that**
the plate-shaped drainage element (30) has substantially smooth lateral surfaces (36), in which recesses (38) for the struts (42, 44) are arranged for mounting the mounting frame (40).

7. Device according to any one of claims 3 to 6,
**characterized in that**
a micro-porous filter medium or a filter medium with a suitable surface treatment for producing a similar separating efficiency, in particular a filter membrane (11), is provided.

8. Device according to any one of claims 3 to 7,
**characterized in that**
a plurality of filter elements (3) is arranged parallel to one another.

9. Device according to any one of claims 3 to 8,
**characterized in that**
several filter elements (3) are combined in a package (50) and arranged in a frame (52).

10. Device according to any one of claims 3 to 9,
**characterized in that**
in a horizontal portion filter elements (3) are combined in a module (70), and at least two modules (70) are arranged vertically on top of each other in the housing.

## Revendications

1. Procédé de filtration avec formation de gâteau de filtre et rétrolavage au moyen d'un dispositif (10), dans lequel
- une suspension de liquide et de solide est introduite par l'intermédiaire d'un dispositif d'introduction (6) dans un boîtier (1) comportant plusieurs éléments filtrants (3) disposés verticalement,
- par application d'une différence de pression au moyen d'un dispositif générateur de pression, du liquide est forcé dans une direction de filtration à travers un milieu filtrant (11) de l'élément filtrant (3) et évacué en tant que filtrat vers une chambre de collecte, pendant que le solide se dépose en tant que gâteau de filtre sur le milieu filtrant (11), et
- à des intervalles de temps déterminés, le filtrat est rétrolavé à travers l'élément filtrant (3) au moyen d'un dispositif de rétrolavage dans le sens inverse de la direction de filtration et le gâteau de filtre déposé est ainsi détaché du milieu filtrant (11),
**caractérisé en ce que**
- le gâteau de filtre détaché se sédimente vers le bas dans un cône (2) au fond du boîtier (1) et est évacué par l'intermédiaire d'un dispositif d'évacuation (9) au sommet du cône (2) dirigé vers le bas, sous forme de boue contenant des solides,
- **en ce que** les éléments filtrants (3) sont reliés à la chambre de collecte par une sortie supérieure et, pour le rétrolavage, le filtrat venant de la chambre de collecte est réintroduit dans les éléments filtrants (3) par la sortie supérieure,
- **en ce qu'**entre les éléments filtrants dans le boîtier sont placées plusieurs zones verticales de type cheminées, qui sont reliées par une jonction horizontale supérieure et une jonction horizontale inférieure, et
- **en ce que** seulement lors du rétrolavage, un circuit d'écoulement vertical est instauré dans le boîtier (1) entre les éléments filtrants (3), un dépôt du solide dans la direction de la pesanteur étant accéléré.

2. Procédé selon la revendication 1, **caractérisé en ce que** plusieurs éléments filtrants (3) sont prévus, sur lesquels la différence de pression est appliquée et le rétrolavage est effectué à chaque fois à des instants différents.

3. Dispositif (10) de filtration avec formation de gâteau de filtre et rétrolavage selon un procédé selon la revendication 1 ou 2, avec
- au moins un boîtier (1),
- plusieurs éléments filtrants (3) disposés verticalement, qui sont placés dans le boîtier (1) et sont raccordés à une chambre de collecte pour le filtrat,
- un dispositif d'introduction (6) pour introduire dans le boîtier (1) une suspension à filtrer composée de liquide et de solide,
- un dispositif générateur de pression pour produire une différence de pression par laquelle le liquide de la suspension peut être forcé dans une direction de filtration à travers un milieu filtrant (11) de l'élément filtrant (3) et peut être évacué en tant que filtrat, tandis que le solide de la suspension se dépose sur le milieu filtrant (11) en tant que gâteau de filtre, et
- un dispositif de rétrolavage par lequel, pour détacher le gâteau de filtre déposé, le filtrat peut être rétrolavé à travers le milieu filtrant (11) à des intervalles de temps déterminé, dans le sens contraire de la direction de filtration,
**caractérisé en ce que**
- au fond du boîtier (1) est formé un cône au sommet, dirigé vers le bas, duquel est placé un dispositif d'évacuation (9) pour évacuer une boue contenant du solide,
- **en ce que** les éléments filtrants (3) sont reliés à la chambre de collecte par une sortie supérieure,
- **en ce que**, pour le rétrolavage, le filtrat venant de la chambre de collecte peut être introduit dans les éléments filtrants (3) par la sortie supérieure, et
- **en ce qu'**entre les éléments filtrants (3) dans le boîtier (1) sont placées plusieurs zones verticales de type cheminées, qui sont reliées par une jonction horizontale supérieure et une jonction horizontale inférieure pour instaurer un circuit d'écoulement vertical lors du rétrolavage.

4. Dispositif selon la revendication 3, **caractérisé en ce que** l'élément filtrant (3) au nombre d'au moins un présente un élément de drainage (30) en forme de plaque avec des canaux intérieurs de drainage (32) et des ouvertures latérales (34), et
**en ce qu'**un milieu filtrant (11) est posé sur l'élément de drainage (3).

5. Dispositif selon la revendication 4, **caractérisé en ce qu'**un cadre rapporté (40) avec une structure composée d'étais (42, 44) est prévu, le milieu filtrant (11) étant placé entre le cadre rapporté (40) et l'élément de drainage (30) en forme de plaque.

6. Dispositif selon la revendication 5, **caractérisé en ce que** l'élément de drainage (30) en forme de plaque présente pour l'essentiel des surfaces latérales lisses (36), dans lesquelles sont placés des évidements (38) pour les étais (42, 44) afin d'appliquer le cadre rapporté (40).

7. Dispositif selon l'une des revendications 3 à 6, **caractérisé en ce qu'**il est prévu un milieu filtrant microporeux ou un milieu filtrant présentant un traitement surface approprié pour produire une efficacité de séparation (11) équivalente, en particulier une membrane filtrante.

8. Dispositif selon l'une des revendications 3 à 7, **caractérisé en ce qu'**une pluralité d'éléments filtrants (3) sont disposés parallèlement les uns aux autres.

9. Dispositif selon l'une des revendications 3 à 8, **caractérisé en ce que** plusieurs éléments filtrants (3) sont regroupés en un paquet (50) et placés dans un cadre (52).

10. Dispositif selon l'une des revendications 3 à 9, **caractérisé en ce que** des éléments filtrants (3) sont regroupés en un module (70) dans une zone horizontale, et
**en ce qu'**au moins deux modules (70) sont placés l'un au-dessus de l'autre verticalement dans le boîtier.
